# FASCICULE DE BREVET EUROPEEN

(11) **EP 3 263 946 B1**
(45) Date de publication et mention de la délivrance du brevet: **17.07.2019**
(21) Numéro de dépôt: 17178010.9
(22) Date de dépôt: 27.06.2017
(51) Int. Cl.: F16F 15/14

(54) **DISPOSITIF D AMORTISSEMENT PENDULAIRE AVEC ELEMENTS EN ELASTOMERE**
FLIEHKRAFTPENDELEINRICHTUNG MIT ELASTOMERTEILEN
CENTRIFUGAL PENDULUM DEVICE WITH RUBBER PARTS

(30) Priorité: 29.06.2016 FR 1656113
(43) Date de publication de la demande: 03.01.2018
(73) Titulaire: Valeo Embrayages, 80009 Amiens Cedex 2 (FR)
(72) Inventeur: RUMEAU, Eric, 80009 AMIENS (FR)
(74) Mandataire: Vincent, Catherine Marie Marguerite

(56) Documents cités:
- WO-A1-2015/161851
- WO-A1-2016/058880
- DE-A1-102014 213 298
- DE-A1-102014 213 462
- FR-A1- 3 014 983

## Description

La présente invention concerne un dispositif d'amortissement pendulaire, notamment pour un système de transmission de véhicule automobile.

Dans une telle application, le dispositif d'amortissement pendulaire peut être intégré à un système d'amortissement de torsion d'un embrayage apte à relier sélectivement le moteur thermique à la boîte de vitesses, afin de filtrer les vibrations dues aux acyclismes du moteur. Un tel système d'amortissement de torsion est par exemple un double volant amortisseur. En variante, dans une telle application, le dispositif d'amortissement pendulaire peut notamment être intégré à un disque de friction de l'embrayage, à un volant solidaire du vilebrequin, à un double embrayage à sec ou humide, ou à un convertisseur de couple hydrodynamique.

Un tel dispositif d'amortissement pendulaire met classiquement en oeuvre au moins un support et au moins un corps pendulaire mobile par rapport à ce support. Dans une réalisation, le déplacement par rapport au support du corps pendulaire est guidé par des organes de roulement.

Il est connu de choisir le dispositif d'amortissement, par exemple via la forme des pistes de roulement, de manière à ce que ce dernier filtre l'ordre d'excitation d'un moteur thermique à deux cylindres du véhicule, encore appelé « ordre 1 », l'ordre d'excitation d'un moteur thermique étant le nombre d'explosions de ce moteur par tour de vilebrequin. De tels dispositifs sont très sensibles à la force de gravité, cette dernière pouvant alors causer des déplacements non souhaités des corps pendulaires, et donc affecter les performances de filtrage.

Les demandes FR3014983A1, WO2015/161851A1, DE102014213298A1, WO2016/058880A1 et DE 10 2014 213462 A1 divulguent un dispositif d'amortissement pendulaire comme indiqué dans le préambule de la revendication 1.

En outre, en dessous d'un certain régime de rotation du moteur, l'effet centrifuge devient inférieur à la gravité et chaque corps pendulaire a alors tendance à chuter et à buter contre la(les) pièces environnante(s). Ceci survient notamment en phase d'arrêt moteur). Les chocs excitent les modes intrinsèques des pièces en cause et génèrent du bruit.

Un but de l'invention est de limiter de tels inconvénients.

L'invention y parvient, selon l'un de ses aspects, à l'aide d'un dispositif d'amortissement pendulaire selon la revendication 1.

Un tel dispositif comprend :
- un support apte à se déplacer en rotation autour d'un axe de rotation (X),
- un corps pendulaire mobile par rapport au support,
- et au moins un organe de roulement venant en contact avec au moins une première piste de roulement solidaire du support et avec au moins une deuxième piste de roulement solidaire du corps pendulaire.

En outre, l'un au moins parmi le support, le corps pendulaire et l'organe de roulement comprend un premier et un deuxième matériaux, le deuxième matériau ayant une densité plus faible que celle du premier matériau et, parallèlement audit axe de rotation (X), les dits premier et deuxième matériaux sont disposés suivant plusieurs couches et le deuxième matériau soit pris en sandwich entre deux couches, respectivement une du premier matériau et une d'un troisième matériau de densité plus importante que celle du premier matériau.

Ainsi, on pourra amortir les vibrations créées dans la ou les pièces en cause excitées par les chocs et réduire les bruits générés.

On notera dès à présent qu'au sens de la présente demande :
- « axialement » signifiera « parallèlement à l'axe (X) de rotation du support »,
- « radialement » signifiera « le long d'un axe appartenant à un plan orthogonal à l'axe de rotation du support et coupant cet axe de rotation du support»,
- « angulairement » ou « circonférentiellement » signifiera « autour de l'axe (X) de rotation du support »,
- « solidaire » signifiera « couplé, ou fonctionnant, avec », et
- l'épaisseur e (el,e2...) est la dimension d'une pièce s'étendant parallèlement à l'axe de rotation X.

Pour favoriser les effets anti-bruits et anti-vibrations recherchés, il est proposé que, dans le dispositif, le deuxième matériau soit un matériau élastiquement déformable, tel un élastomère.

Au sens de l'invention, les couches mentionnées se succèdent axialement, c'est-à-dire parallèlement à l'axe (X). Les couches peuvent être, au moins localement, sensiblement perpendiculaires à l'axe (X).

Au sens de l'invention, chaque couche peut n'être composée que d'un matériau unique, par exemple le premier matériau ou le deuxième matériau. Chaque couche peut être continue. Chaque couche peut déboucher radialement extérieurement et intérieurement.

Quant au premier matériau, il pourra typiquement comprendre un métal, un tel matériau conférant une masse satisfaisante au corps pendulaire nécessaire à la filtration des oscillations. Un tel matériau participe également à la bonne tenue en centrifugation du corps pendulaire.

Un problème corollaire ici pris en compte concerne la manière de disposer lesdits premier et deuxième matériaux dans la ou les pièces en cause, de façon à faciliter la fabrication de ces pièces tout en favorisant l'efficacité de l'amortissement visé.

Une solution proposée consiste en ce que, dans ce(s) pièce(s), parallèlement audit axe de rotation (X), l'une des couches, intermédiaire entre deux autres dites couches, comprenne ledit deuxième matériau.

Une solution complémentaire ou alternative proposée consiste en ce que, dans ce(s) pièce(s), et toujours parallèlement audit axe de rotation (X) et sur l'un au moins parmi le support, le corps pendulaire et l'organe de roulement:
- le deuxième matériau soit pris en sandwich entre deux couches du premier matériau,
- et/ou le deuxième matériau définisse un revêtement sur le premier matériau.

Ainsi, la couche intermédiaire en matériau de « plus faible densité » agira en couche absorbante de vibrations entre deux autres dites couches, et il suffira de fabriquer la(les) pièce(s) par couches, puis de les assembler, par exemple par sertissage ou par collage, typiquement dans le sens de leurs épaisseurs.

Pour favoriser encore une mise en oeuvre aisée, via des tôles mises en forme, il est aussi proposé :
- qu'au sein de chacune desdites couches, il existe au moins un plan (P) perpendiculaire audit axe de rotation dans lequel la couche, parmi lesdites couches, par laquelle passe ce plan est, en termes de matériaux, constituée exclusivement du premier matériau ou du deuxième matériau,
- et/ou que, parallèlement audit axe de rotation, il existe intérieurement une section (S) qui suit le profil du support, du corps pendulaire ou de l'organe de roulement au sein d'une seule dite couche constituée exclusivement du deuxième matériau et/ou sans présence du premier matériau.

Selon un aspect de l'invention, seuls les organes de roulement sont composés de deux matériaux disposés en couche, de préférence de deux ou trois matériaux dont le moins dense est pris en sandwich entre deux couches des deux autres matériaux.

Selon un autre aspect de l'invention, seules masses pendulaires sont composés de deux matériaux disposés en couche, de préférence de deux ou trois matériaux dont le moins dense est pris en sandwich entre deux couches des deux autres matériaux.

Selon un autre aspect de l'invention, seul le support est composé de deux matériaux disposés en couche, de préférence de deux ou trois matériaux dont le moins dense est pris en sandwich entre deux couches des deux autres matériaux.

Au sens de l'invention, le support peut être composé d'une ou de plusieurs pièces solidaires entre elles. Le support est apte à être entrainé en rotation par le reste de la chaine de transmission, notamment un double volant amortisseur, un convertisseur de couple, une machine électrique, un disque de friction, un moyeu ou tous autres pièces solidaires de l'une des pièces précitées.

Deux modes de réalisation sur lesquels une telle structure d'absorption de vibrations peut être prévue sont en particulier par ailleurs visés :
Dans un premier mode de réalisation, le corps pendulaire du dispositif pourra comprendre une première et une deuxième masses pendulaires situées axialement de part et d'autre du support et reliées entre elles par au moins une entretoise.

On pourra alors en outre prévoir que la première piste de roulement soit définie par une partie du contour d'une fenêtre ménagée dans le support, et la deuxième piste de roulement définie par l'entretoise.

En alternative, dans une solution « inversée », on pourra prévoir que l'(chaque) organe de roulement vienne en contact :
- d'une part avec deux premières pistes de roulement respectivement solidaires des première et deuxième masses pendulaires, et
- d'autre part une dite deuxième piste de roulement solidaire du support.

L'invention pourra si nécessaire être encore mieux comprise avec la description qui suit en référence à différents exemples non limitatifs de mise en oeuvre de celle-ci et aux dessins annexés où :
- la figure 1 représente de façon schématique et partielle un dispositif d'amortissement dispositif d'amortissement pendulaire, ou de torsion, selon un exemple de mise en oeuvre de l'invention,
- la figure 2 en détaille une partie, en vue extérieure agrandie,
- la figure 3 est une coupe schématique selon la ligne III-III de la figure 2,
- la figure 4 est une vue suivant des coupes identiques à celle de la figure 3, suivant une variante,
- la figure 5 est une vues suivant des coupes identiques à celle de la figure 3, d'un dispositif d'amortissement non couvert par l'invention,
- la figure 6 est aussi une variante de réalisation du dispositif d'amortissement de l'invention, en vue extérieure comme sur la figure 1,
- et les figures 7,8 représentent encore, de façon schématique et partielle, deux autres exemples de solutions alternatives à l'invention selon la variante de la figure 6, suivant des coupes identiques à celle de la figure 3.

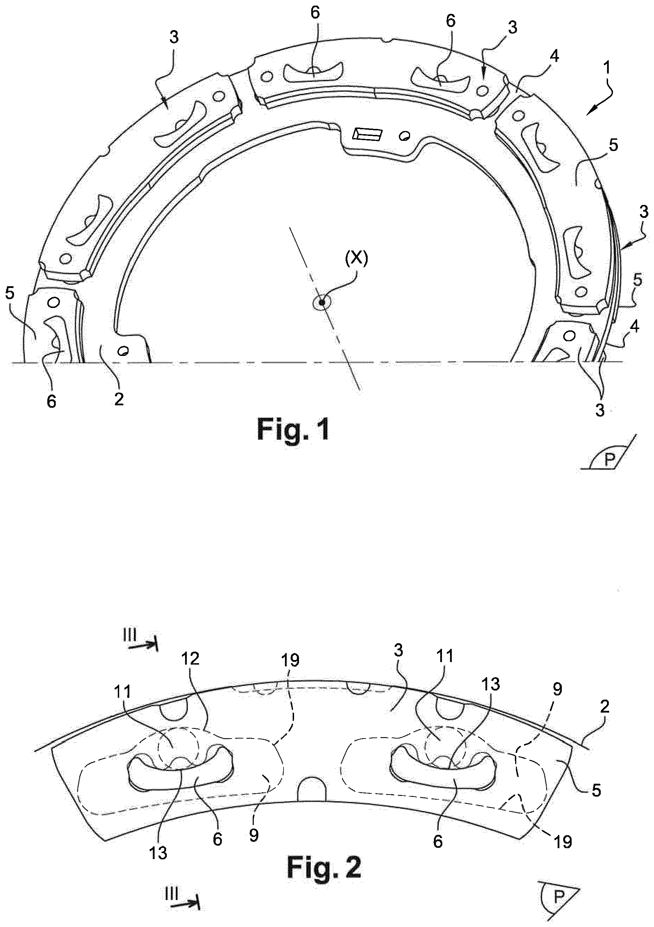

On a représenté sur la figure 1 un dispositif d'amortissement 1 pendulaire selon un premier exemple de réalisation, avec donc un détail agrandi figure 2.

Le dispositif d'amortissement 1 est de type oscillateur pendulaire. Le dispositif 1 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique, un disque de friction d'embrayage, un double embrayage à sec ou humide, ou un volant solidaire du vilebrequin.

Ce composant peut faire partie d'un groupe motopropulseur d'un véhicule automobile, ce groupe comprenant un moteur thermique notamment à deux, trois quatre, six ou huit cylindres.

De manière connue, le dispositif 1 peut ainsi comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X, et
- une pluralité de corps pendulaires 3 mobiles par rapport au support 2.

Dans le mode de réalisation retenu sur la figure 1, plusieurs corps pendulaires 3 sont prévus, répartis circonférentiellement de façon uniforme sur le pourtour de l'axe X.

Le support 2 du dispositif d'amortissement pendulaire 1 peut être constitué par :
- un élément d'entrée de l'amortisseur de torsion,
- un élément de sortie,
- un élément de phasage intermédiaire disposé entre deux séries de ressort de l'amortisseur, ou
- un élément lié en rotation à un des éléments précités et distinct de ces derniers, étant alors par exemple un support propre au dispositif 1.

Le support 2 peut être une rondelle de guidage ou une rondelle de phasage. Le support peut encore être autre, par exemple un flasque du composant.

Selon la mise en oeuvre de l'invention ici considérée, et donc décrite ci-après en référence à la figure 1, le support 2 est unique et présente globalement une forme d'anneau comportant deux côtés (ou faces) opposé(e)s 4 qui sont ici des faces planes. Toutefois, le support 2 pourrait n'être pas unique.

Chaque corps pendulaire 3 comprend dans l'exemple considéré :
- deux masses pendulaires 5, chaque masse pendulaire 5 s'étendant axialement en regard d'un côté 4 du support 2, et
- au moins un, deux dans l'exemple, organe(s) de liaison 6 (encore appelé(s) « entretoise(s) ») solidarisant les deux masses pendulaires 5.

Les organes de liaison 6 sont dans l'exemple considéré décalés angulairement ou circonférentiellement.

Dans l'exemple, chaque organe de liaison 6 est solidarisé aux masses pendulaires 5 en étant par exemple emmanché à force, en étant par exemple soudé sur chaque masse pendulaire 5.

Le dispositif 1 comprend encore des organes de roulement 11 guidant le déplacement des corps pendulaires 3 par rapport au support 2. Les organes de roulement 11 sont ici des rouleaux. Chaque organe de roulement 11 présente un axe longitudinal parallèle à l'axe de rotation X du support 2.

Dans l'exemple décrit, le mouvement par rapport au support 2 de chaque corps pendulaire 3 est guidé par deux organes de roulement 11.

Chaque organe de roulement 11 est reçu dans une ouverture, ou fenêtre, 9 en forme de portion d'anneau ménagée à travers tout le support 2. Dans l'exemple considéré, chaque ouverture 9 reçoit un organe de roulement 11 et une entretoise 6, respectivement angulairement écartés entre eux.

Chaque ouverture, qui est fermée, est limitée périphériquement par une paroi 19 du support 2.

Les ouvertures 9, identiques, peuvent être angulairement réparties de façon équilibrée autour l'axe de rotation X.

Dans cet exemple, chaque organe de roulement 11 coopère d'une part avec une première piste de roulement 12 solidaire du support 2, et qui est ici formée par une portion du contour de l'ouverture 9, défini par la paroi 19, et d'autre part avec une deuxième piste de roulement 13 solidaire du corps pendulaire 3 et définie par une portion du bord radialement extérieur de l'organe de liaison 6 correspondant.

Ainsi, chaque première piste de roulement 12 est définie par une partie du contour d'une des fenêtres 9 ménagée dans le support 2, et la deuxième piste de roulement 13 est définie par l'entretoise 6 en place dans la même fenêtre 9 considérée.

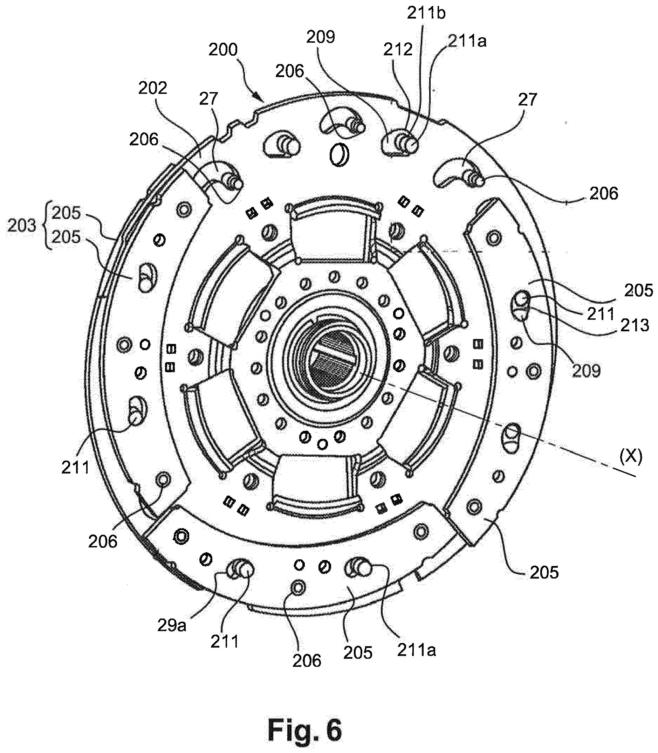

Une alternative peut être envisagée, comme sur la figure 6.

Dans ce mode de réalisation, les mêmes pièces fonctionnelles portent la même référence que dans le premier mode de réalisation augmentée de 200.

On retrouve dans ce dispositif d'amortissement pendulaire 200, comme figure 1, une solution où le corps pendulaire 203 comprend une première et une deuxième masses pendulaires 205 (deux séries de quatre première et une deuxième masses pendulaires par côté, dans l'exemple) situées axialement de part et d'autre du support annulaire central 202.

Ces première et deuxième (séries de) masses pendulaires 205 sont reliées entre elles par des entretoises 206.

Par groupes, les entretoises 206 peuvent être des rivets qui, par groupes, relient entre eux, parallèlement à l'axe central X, deux masses pendulaires 205.

Chaque entretoise 206 traverse une première ouverture 27 du support annulaire central 202 dans laquelle l'entretoise est mobile lors de son déplacement par rapport à ce support 202.

Par ailleurs, des organes de roulement, ou rouleaux, 211 ayant les fonctions précitées, roulent librement dans des deuxièmes ouvertures 209 du support 202 différentes des premières ouvertures 27. En outre, des prolongements axiaux 211a,211b des organes de roulement 211 passent librement à travers des ouvertures respectives (29a, 29b) des masses pendulaires 205, situées donc axialement de part et d'autre du support central 202.

Chacune des ouvertures sensiblement coaxiales 209,29a, 29b peut avoir une forme en C ou de haricot, de même pour les premières ouvertures 27.

La courbure des ouvertures 209 pourra être inversée par rapport à celle des ouvertures 29a, 29b.

La concavité des ouvertures 209 est ici orientée vers le centre, l'axe X, et celle des ouvertures 29a, 29b à l'inverse, vers l'extérieur.

Sur ce dispositif, chaque organe de roulement 211 vient en contact :
- d'une part avec une première piste de roulement 212 solidaire du support 202, et
- d'autre part, avec deux dites deuxième pistes de roulement 213 respectivement solidaires des première et deuxième masses pendulaires 205.

Ces derniers contacts sont assurés via les prolongements axiaux 211a, 211b des organes de roulement 211.

Dans une alternative (non illustrée et évoquée ci-avant comme une solution à structure inversée par rapport à l'alternative de réalisation de la figure 6), le corps pendulaire pourrait être axialement central et le support pourrait donc comprendre une première et une deuxième parties situées axialement de part et d'autre de ladite partie centrale (qui peut être unique) du corps pendulaire. Les première et deuxième parties du support seraient reliées entre elles par des entretoises montées dans des orifices (ou fenêtres), chacun en forme d'arc, ménagés dans le corps pendulaire et dans les première et deuxième parties du support.

Chaque organe de roulement viendrait en contact avec:
- d'une part deux dites premières pistes de roulement respectivement solidaires des première et deuxième parties du support, et
- d'autre part une unique dite deuxième piste de roulement solidaire du corps pendulaire, alors central.

Chacun des orifices traversés par les entretoises pourrait avoir une forme en C ou de haricot, donc arquée. Ceux centraux formés dans le corps pendulaire central pourraient être à courbure inversée par rapport à ceux des première et deuxième parties latérales du support.

Au-delà de telles réalisations structurelles, et quel que soit le mode de réalisation retenu, le dispositif d'amortissement pendulaire considéré sera en outre tel que, selon l'invention, l'un au moins parmi les éléments constitués de l'organe de roulement, du support (qu'il soit en une ou plusieurs parties), et du corps pendulaire, en tout ou partie de sa, ou de certaines ou de chacune de ses, masse(s) pendulaire(s), comprendra un premier matériau 21 et un deuxième matériau 23, le deuxième matériau 23 ayant une densité plus faible que celle du premier matériau 21.

Le deuxième matériau est matériau absorbeur de vibrations.

Favorablement il pourra s'agir d'un matériau élastiquement déformable.

Le deuxième matériau pourra être un élastomère connu pour sa performance d'absorption de vibrations.

Typiquement, le premier matériau peut comprendre un métal, tel de l'acier.

En outre, parallèlement à l'axe de rotation X et individuellement pour chacun des éléments ci-avant cités, lesdits premier et deuxième matériaux 21,23 y sont disposés suivant plusieurs couches, telles que 210 (ou 210a,210b),233,230a,233a.

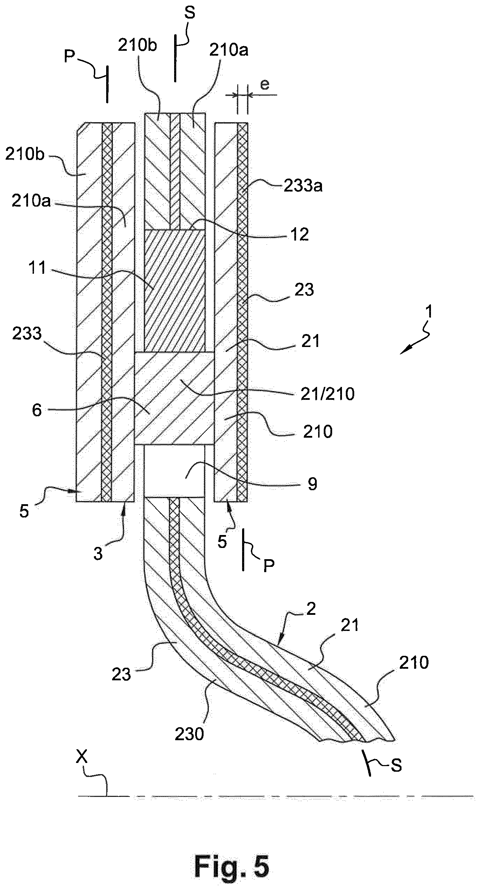

Dans un mode de réalisation, et comme schématisé figure 5, sur l'un au moins parmi le support 2, le corps pendulaire 3 et l'organe de roulement 11, et suivant une épaisseur e, le deuxième matériau 23 définit un revêtement 233a sur le premier matériau ou sur un autre matériau de densité encore plus élevée.

Dans l'exemple, la masse pendulaire 5 comprend alors deux couches : une couche 210 et le revêtement 233a.

Plus précisément, dans cet exemple, une parmi deux masses pendulaires 5 présente cette solution de revêtement 233a. Toutefois ceci peut s'appliquer au support 2 (qu'il soit central comme ici, ou en plusieurs parties situées de part et d'autre d'un corps pendulaire alors central) et/ou à l'organe de roulement 11 et/ou au corps pendulaire (qu'il soit en plusieurs parties ou masses, 5, situées de part et d'autre d'un support central comme ici, ou en une partie alors centrale).

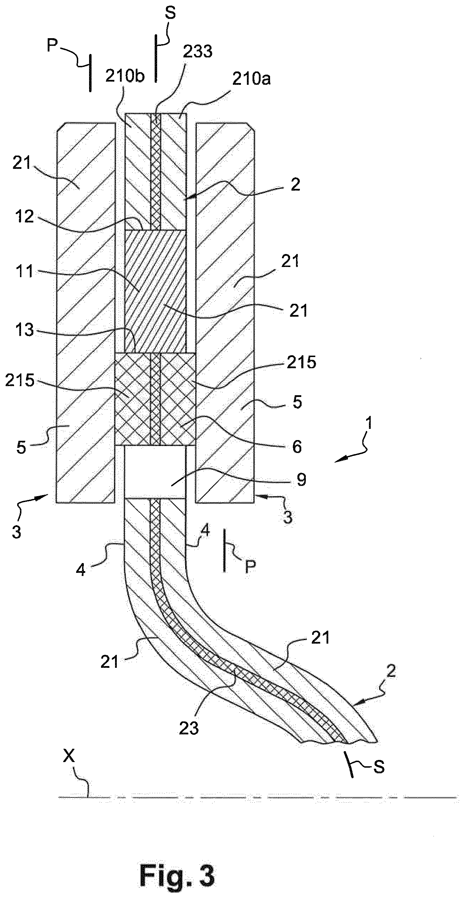

Dans un autre mode de réalisation, et comme schématisé sur les figures 3, 4, 6-8, l'une des couches, 233, intermédiaire entre deux autres dites couches 210,230, comprend le deuxième matériau 23.

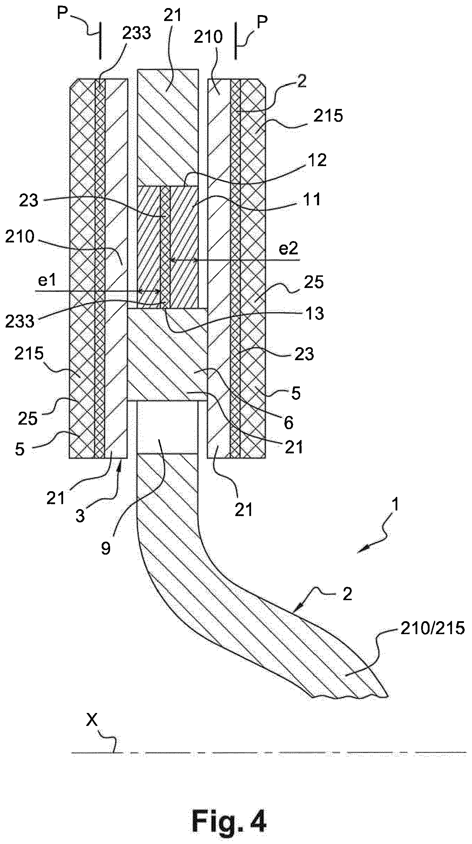

Dans les exemples de ces figures 3, 4, 7 et 8, on peut considérer que, parallèlement à l'axe de rotation X, en l'occurrence ici dans des plans orthogonaux à l'axe de rotation X, le deuxième matériau 23 (ou la couche qui le contient, telle une couche 233, est pris(e) en sandwich entre :
- soit deux couches du même premier matériau 21, telles lesdites deux autres couches 210a,210b dans l'exemple de la figure 3,
- soit deux couches en matériaux différents, respectivement une couche 210 du premier matériau 21 et une autre couche 215 (troisième couche dans l'exemple) d'un troisième matériau 25 de densité plus importante que celle du premier matériau, dans l'exemple de la figure 4.

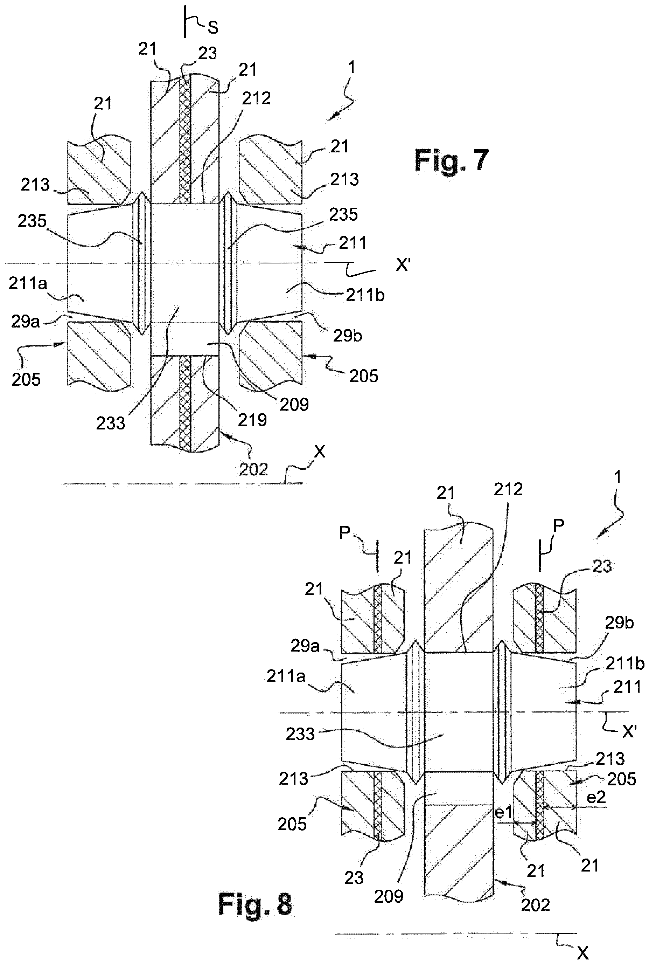

Les épaisseurs e1,e2 des différentes couches, comme dans les exemples des figures 4 et 8, et notamment des couches latérales 210,230,215 formées dans le même premier matériau 21 et/ou en premier et troisième matériaux, pourront être différentes entre elles, telles ces épaisseurs e1,e2 dans les exemples des figures 4 et 8.

Les choix d'épaisseurs et de matériaux pourront permettre d'agir de manière ciblée sur les fréquences en cause, tant en émission de vibrations (couches 210...,230,215) qu'en amortissement (couche 233), l'émission de vibrations n'étant bien sûr pas recherchée, le deuxième matériau 23 permettant l'amortissement des vibrations tout en permettant au dispositif global de conserver une masse mécanique résistante et suffisamment lourde pour filtrer correctement.

Concernant encore la position en particulier de la couche contenant le deuxième matériau 23, deux situations sont à considérer, qui peuvent être alternatives ou complémentaires, suivant la forme des pièces concernées :
- d'abord, au sein de chacune desdites couches, il existera favorablement au moins un plan P perpendiculaire à l'axe de rotation X dans lequel la couche, parmi lesdites couches, par laquelle passe ce plan P est, en termes de matériaux, constituée exclusivement du premier matériau 21 ou du deuxième matériau 23,
- et/ou, suivant l'épaisseur (e,el...) de la pièce considérée, il existe intérieurement une section S (voir figures 3,5) qui suit le profil du support, du corps pendulaire ou de l'organe de roulement au sein d'une seule dite couche constituée exclusivement du deuxième matériau 23 et/ou sans présence du premier matériau 21.

Ainsi, on pourra réaliser le dispositif 1 avec des tôles, ou plaques de tôle, soit recouvertes (comme la masse 5 dans l'exemple de la figure 5) soit encadrant (comme sur les autres figures) au moins une couche 233/233a à capacité d'absorption de vibrations.

Une fois mises en forme, les tôles pourront être serties ou collées ensemble et avec la couche de matière 23.

Concernant la répartition et la disposition relative des matières et couches, les exemples figurés montrent :
- dans un mode de réalisation, comme par exemple figure 3, que les organes de roulement peuvent être dans le premier matériau 21, de même que chaque masse pendulaire 5, avec un support central 2 formé desdits premier et deuxième matériaux, 21,23,
- dans un autre mode de réalisation comme par exemple figure 4, que les organes de roulement ainsi que chaque masse pendulaire 5 peuvent être formés desdits premier et deuxième matériaux, 21,23, avec la couche de deuxième matériau 23 interposée axialement entre deux couches du premier matériau 21, et un support central 2 formé du premier matériau 21, monocouche,
- dans encore un autre mode de réalisation comme par exemple figure 5, ce sont les organes de roulement qui peuvent être dans le premier matériau 21, tandis que chaque masse pendulaire 5 et le support central 2 peuvent être formés desdits premier et deuxième matériaux, 21,23, avec par exemple:
   -- sur l'une des masses pendulaires 5, la couche 233 de deuxième matériau interposée axialement entre deux couches 210a,210b du premier matériau,
   -- et, sur l'autre masse pendulaire 5, une couche 233a de revêtement, formée avec le deuxième matériau 23, qui recouvre extérieurement une couche 210 du premier matériau 21,
- et encore dans autre variante du dispositif, il est présenté aux figures 7,8 deux autres exemples où chaque masse pendulaire 205 comprend deux cavités 21a ou deux cavités 21b parallèles à l'axe X et dont une partie du contour définit une deuxième piste de roulement 213, le dispositif 1 comprenant ainsi dans cet exemple (figures 6 à 8) deux deuxièmes pistes de roulement 213.

Dans les exemples considérés figures 7,8, la première piste de roulement 212 est toujours définie par une partie du contour fermé (paroi 219) de la fenêtre 209, si bien que la première 212 et les deuxièmes 213 pistes de roulement sont décalées axialement. L'organe de roulement 211 est donc sollicité en flexion et non en compression comme cela est le cas dans la configuration du dispositif 1 présentée à la figure 1. Chaque organe de roulement 211 présente un axe X' de rotation parallèle à l'axe X. et, autour de cet axe X', chaque organe de roulement 11 présente une surface latérale extérieure 233 pourvue de deux collerettes 235 faisant saillies dans la direction radiale. Les collerettes 235 viennent axialement s'interposer entre le support 202 et les masses pendulaires 205. La surface latérale extérieure 233 se prolonge ensuite axialement au-delà de chaque collerette 235, en éloignement de l'autre collerette 235 pour définir les prolongements axiaux 211a, 211b des organes de roulement 211 par lesquels l'organe de roulement 211 vient en contact avec les deuxièmes pistes de roulement 213.

Toujours dans les exemples considérés figures 7,8, la surface latérale extérieure 233 coopère à la fois avec la première piste 212 (dans sa partie centrale entre les collerettes 235) et avec les deuxièmes 213 pistes de roulement (axialement de part et d'autre des collerettes 235).

En outre, dans un mode de réalisation comme par exemple figure 7, alors que chaque masse pendulaire 205 est formée uniquement du premier matériau 21, c'est le support central 202 est qui est formé desdits premier et deuxième matériaux, 21,23 disposés suivant plusieurs couches, parallèlement à l'axe X ou X'.

Dans encore un autre mode de réalisation, comme par exemple figure 8, c'est l'inverse : alors que le support central 202 est formé uniquement du premier matériau 21 c'est chaque masse pendulaire 205 qui est formé desdits premier et deuxième matériaux, 21,23, avec la couche de deuxième matériau 23 interposée axialement entre deux couches du premier matériau 21.

## Revendications

1. Dispositif d'amortissement pendulaire (1,200) comprenant :
- un support (2,202) apte à se déplacer en rotation autour d'un axe de rotation (X),
- un corps pendulaire (3,203) mobile par rapport au support,
- et au moins un organe de roulement (11,211) venant en contact avec au moins une première piste de roulement (12,212) solidaire du support (2,202) et avec au moins une deuxième piste de roulement (13,213) solidaire du corps pendulaire (3,203),
**caractérisé en ce que**
l'un au moins parmi le support (2,202), le corps pendulaire (3,203) et l'organe de roulement (11,211) comprend un premier et un deuxième matériau (21,23), le deuxième matériau (23) ayant une densité plus faible que celle du premier matériau (21), et, parallèlement audit axe de rotation (X), lesdits premier et deuxième matériaux sont disposés suivant plusieurs couches (210,210a,210b,233, 233a),
parallèlement audit axe de rotation (X), et sur l'un au moins parmi le support (2,202), le corps pendulaire (3,203) et l'organe de roulement (11,211), le deuxième matériau (23) est pris en sandwich entre deux couches, respectivement une du premier matériau (21) et une d'un troisième matériau (25) de densité plus importante que celle du premier matériau.

2. Dispositif selon la revendication 1, où le deuxième matériau (23) est un matériau élastiquement déformable, tel un élastomère.

3. Dispositif selon l'une des revendications précédentes, où le premier matériau (21) comprend un métal.

4. Dispositif selon l'une des revendications précédentes où, parallèlement audit axe de rotation (X), l'une desdites couches (233), intermédiaire entre deux autres dites couches, comprend ledit deuxième matériau (23).

5. Dispositif selon l'une des revendications précédentes où, sur l'un au moins parmi le support (2,202), le corps pendulaire (3,203) et l'organe de roulement (11,211), le deuxième matériau (23) est pris en sandwich entre deux couches du premier matériau (21).

6. Dispositif selon l'une des revendications précédentes où, suivant une épaisseur s'étendant parallèlement audit axe de rotation (X), et sur l'un au moins parmi le support (2,202), le corps pendulaire (3,203) et l'organe de roulement (11,211), le deuxième matériau (23) définit un revêtement (233a) sur le premier matériau.

7. Dispositif selon l'une des revendications précédentes où, au sein de chacune desdites couches, il existe au moins un plan (P) perpendiculaire audit axe de rotation (X) dans lequel la couche, parmi lesdites couches, par laquelle passe ce plan est, en termes de matériaux, constituée exclusivement du premier matériau (21) ou du deuxième matériau (23).

8. Dispositif selon l'une des revendications précédentes où, suivant une épaisseur, s'étendant parallèlement audit axe de rotation (X), il existe intérieurement une section qui suit le profil du support (2,202), du corps pendulaire (3,203) ou de l'organe de roulement (11,211) au sein d'une seule dite couche constituée exclusivement du deuxième matériau (23) et/ou sans présence du premier matériau (21).

9. Dispositif selon l'une des revendications précédentes, où le corps pendulaire (3) comprend une première et une deuxième masses pendulaires (5,205) situées axialement de part et d'autre du support et reliées entre elles par au moins une entretoise (6,206).

10. Dispositif selon la revendication 9, où la première piste de roulement (12) est définie par une partie du contour d'une fenêtre (9) ménagée dans le support (2), et la deuxième piste de roulement (13) est définie par l'entretoise (6).

11. Dispositif selon la revendication 9, où l'organe de roulement vient en contact :
- d'une part avec deux premières pistes de roulement (212) respectivement solidaires des première et deuxième masses pendulaires (205), et
- d'autre part une dite deuxième piste de roulement (213) solidaire du support (202).

## Patentansprüche

1. Pendeldämpfungsvorrichtung (1, 200), umfassend:
- einen Träger (2, 202), der in der Lage ist, eine Drehbewegung um eine Drehachse (X) auszuführen,
- einen Pendelkörper (3, 203), der bezüglich des Trägers beweglich ist,
- und mindestens ein Wälzelement (11, 211), das mit mindestens einer ersten Rollbahn (12, 212), die mit dem Träger (2, 202) fest verbunden ist, und mit mindestens einer zweiten Rollbahn (13, 213), die mit dem Pendelkörper (3, 203) fest verbunden ist, in Kontakt kommt,
**dadurch gekennzeichnet, dass**
mindestens eines der Teile Träger (2, 202), Pendelkörper (3, 203) und Wälzelement (11, 211) ein erstes und ein zweites Material (21, 23) umfasst, wobei das zweite Material (23) ein Dichte aufweist, die niedriger als diejenige des ersten Materials (21) ist, und, parallel zur Drehachse (X), das erste und das zweite Material in mehreren Schichten (210, 210a, 210b, 233, 233a) angeordnet sind,
parallel zur Drehachse (X), und bei mindestens einem der Teile Träger (2, 202), Pendelkörper (3, 203) und Wälzelement (11, 211), das zweite Material (23) sandwichartig zwischen zwei Schichten angeordnet ist, nämlich einer aus dem ersten Material (21) und einer aus einem dritten Material (25) mit einer Dichte, die höher als diejenige des ersten Materials ist.

2. Vorrichtung nach Anspruch 1, wobei das zweite Material (23) ein elastisch verformbares Material ist, wie etwa ein Elastomer.

3. Vorrichtung nach einem der vorhergehenden Ansprüche, wobei das erste Material (21) ein Metall umfasst.

4. Vorrichtung nach einem der vorhergehenden Ansprüche, wobei, parallel zur Drehachse (X), die eine der Schichten (233), die sich zwischen zwei anderen besagten Schichten befindet, das zweite Material (23) umfasst.

5. Vorrichtung nach einem der vorhergehenden Ansprüche, wobei bei mindestens einem der Teile Träger (2, 202), Pendelkörper (3, 203) und Wälzelement (11, 211) das zweite Material (23) sandwichartig zwischen zwei Schichten des ersten Materials (21) angeordnet ist.

6. Vorrichtung nach einem der vorhergehenden Ansprüche, wobei, in einer Dicke, die sich parallel zur Drehachse (X) erstreckt, und bei mindestens einem der Teile Träger (2, 202), Pendelkörper (3, 203) und Wälzelement (11, 211), das zweite Material (23) eine Beschichtung (233a) auf dem ersten Material definiert.

7. Vorrichtung nach einem der vorhergehenden Ansprüche, wobei innerhalb jeder der Schichten mindestens eine zu der Drehachse (X) senkrechte Ebene (P) existiert, in welcher die Schicht, von den Schichten, durch welche diese Ebene verläuft, im Hinblick auf Materialien ausschließlich aus dem ersten Material (21) oder aus dem zweiten Material (23) besteht.

8. Vorrichtung nach einem der vorhergehenden Ansprüche, wobei, in einer Dicke, die sich parallel zur Drehachse (X) erstreckt, innen ein Abschnitt existiert, welcher dem Profil des Trägers (2, 202), des Pendelkörpers (3, 203) oder des Wälzelements (11, 211) innerhalb einer einzigen besagten Schicht folgt, die ausschließlich aus dem zweiten Material (23) besteht und/oder in der das erste Material (21) nicht vorhanden ist.

9. Vorrichtung nach einem der vorhergehenden Ansprüche, wobei der Pendelkörper (3) eine erste und eine zweite Pendelmasse (5, 205) umfasst, die sich axial beiderseits des Trägers befinden und miteinander durch eine Strebe (6, 206) verbunden sind.

10. Vorrichtung nach Anspruch 9, wobei die erste Rollbahn (12) durch einen Teil der Kontur eines Fensters (9) definiert ist, das im Träger (2) ausgebildet ist, und die zweite Rollbahn (13) durch die Strebe (6) definiert ist.

11. Vorrichtung nach Anspruch 9, wobei das Wälzelement in Kontakt kommt:
- einerseits mit zwei ersten Rollbahnen (212), die mit der ersten bzw. zweiten Pendelmasse (205) fest verbunden sind, und
- andererseits mit einer zweiten Rollbahn (213), die mit dem Träger (202) fest verbunden ist.

## Claims

1. Pendulum damping device (1, 200) comprising:
- a support (2, 202) that can be displaced in rotation about an axis of rotation (X),
- a pendulum body (3, 203) that is mobile relative to the support,
- and at least one rolling member (11, 211) coming into contact with at least a first rolling track (12, 212) integral to the support (2, 202) and with at least one second rolling track (13, 213) integral to the pendulum body (3, 203),
**characterized in that**
at least one out of the support (2, 202), the pendulum body (3, 203) and the rolling member (11, 211) comprises a first and a second material (21, 23), the second material (23) having a lower density than that of the first material (21), and, parallel to said axis of rotation (X), said first and second materials are arranged in several layers (210, 210a, 201b, 233, 233a),
parallel to said axis of rotation (X), and, on at least one out of the support (2, 202), the pendulum body (3, 203) and the rolling member (11, 211), the second material (23) is sandwiched between two layers, respectively one of the first material (21) and one of a third material (25) of higher density than that of the first material.

2. Device according to Claim 1, wherein the second material (23) is an elastically deformable material, such as an elastomer.

3. Device according to one of the preceding claims, wherein the first material (21) comprises a metal.

4. Device according to one of the preceding claims, wherein, parallel to said axis of rotation (X), one of said layers (233), intermediate between two other said layers, comprises said second material (23) .

5. Device according to one of the preceding claims, wherein, on at least one out of the support (2, 202), the pendulum body (3, 203) and the rolling member (11, 211), the second material (23) is sandwiched between two layers of the first material (21).

6. Device according to one of the preceding claims, wherein, over a thickness extending parallel to said axis of rotation (X), and on at least one out of the support (2, 202), the pendulum body (3, 203) and the rolling member (11, 211), the second material (23) defines a coating (233a) on the first material.

7. Device according to one of the preceding claims, wherein, within each of said layers, there is at least one plane (P) at right angles to said axis of rotation (X) in which the layer, out of said layers, through which this plane passes is, in terms of materials, composed exclusively of the first material (21) or of the second material (23).

8. Device according to one of the preceding claims, wherein, over a thickness, extending parallel to said axis of rotation (X), there is, internally, a section which follows the profile of the support (2, 202), of the pendulum body (3, 203) or of the rolling member (11, 211) within just one said layer composed exclusively of the second material (23) and/or without any of the first material (21) being present.

9. Device according to one of the preceding claims, wherein the pendulum body (3) comprises a first and a second pendulum masses (5, 205) situated axially on either side of the support and linked to one another by at least one spacer (6, 206).

10. Device according to Claim 9, wherein the first rolling track (12) is defined by a part of the outline of a window (9) formed in the support (2), and the second rolling track (13) is defined by the spacer (6).

11. Device according to Claim 9, wherein the rolling member comes into contact:
- on the one hand with two first rolling tracks (212) respectively integral to the first and second pendulum masses (205), and
- on the other hand with one said second rolling track (213) integral to the support (202).
